# DEMANDE DE BREVET EUROPEEN

(11) **EP 3 160 011 A1**
(43) Date de publication de la demande: **26.04.2017**
(21) Numéro de dépôt: 16195175.1
(22) Date de dépôt: 21.10.2016
(51) Int. Cl.: H02K 1/06, H02K 15/02

(54) **PAQUET DE TÔLES FIXÉES ENTRE ELLES PAR COLLAGE, PROCÉDÉ ET INSTALLATION DE FABRICATION D'UN TEL PAQUET DE TÔLES**

(30) Priorité: 23.10.2015 FR 1560171
(71) Demandeur: R. BOURGEOIS (société anonyme), 25000 Besancon (FR)
(72) Inventeur: BOURGEOIS, Raymond Nicolas, 25870 AUXON DESSUS (FR)
(74) Mandataire: Lavialle, Bruno François Stéphane

(57) **Abrégé**

Paquet de tôles pour machine électromagnétique, comprenant des paires de tôles fixées entre elles par des points de collage. Les points de collage comprennent des points d'une première colle et des points d'une deuxième colle ayant un temps de prise inférieur à un temps de prise de la première colle, le temps de prise de la deuxième colle étant de quelques secondes, la première colle ayant une propriété de fixation supérieure à celle de la deuxième colle.

Procédé et installation de fabrication d'un tel paquet de tôles.

## Description

La présente invention concerne la fabrication de paquets de tôles pour constituer des armatures feuilletées de machines électromagnétiques.

### ETAT DE LA TECHNIQUE

Un paquet de tôles est un ensemble de tôles qui sont fixées à plat les unes contre les autres. De tels paquets de tôles sont utilisés pour former des armatures conductrices de flux magnétique et par exemple des stators et des rotors de machines électriques.

Ces paquets de tôles sont fabriqués dans des installations comprenant une succession d'outils (couple matrice et poinçon) dans lesquels est déplacée une bande de métal, généralement un acier au silicium. Le dernier outil de découpe, dit outil de détourage, assure la séparation des tôles de la bande. Les tôles sont empilées les unes sur les autres en sortie de l'outil de détourage, soit directement dans l'outil de détourage au fur et à mesure de leur découpage, soit dans un poste séparé.

Il existe de nombreux modes de fixation des tôles entre elles.

Certains paquets de tôles sont ainsi réalisés par soudage ou rivetage des tôles. Ces opérations de fixation demandent toutefois des équipements difficiles à intégrer dans les installations de fabrication de paquets de tôles.

Il est par ailleurs connu de fixer les tôles les unes aux autres au moyen d'agrafes mâles et femelles découpées dans chaque tôle et engagées les unes dans les autres (assemblage par « interlocking »). L'installation comprend alors au moins un outil dont la matrice et le poinçon correspondant ont une forme adaptée pour former les moyens d'agrafages. L'opération d'agrafage est réalisée dans l'outil de détourage en plaquant la dernière tôle découpée par rapport au paquet de tôles en cours de formation de manière à engager les agrafes de la tôle dernièrement découpée dans les ouvertures de la dernière tôle du paquet de tôles, ou l'inverse. L'installation d'emboutissage est donc relativement complexe.

Pour simplifier la fabrication des paquets de tôles, il a été envisagé de fixer les tôles les unes aux autres au moyen de points de colle. Aucune colle connue n'a à la fois une tenue suffisante en température pour ce type d'application et une vitesse de polymérisation suffisamment élevée par rapport au procédé de fabrication. Sont connues des colles structurales dites « contact » qui ont un temps de polymérisation de quelques secondes, mais ces colles ne supportent pas de température d'utilisation continue supérieure à 120°C. Sont connues d'autres colles structurales qui ont des températures d'utilisation en continu supérieures à 150°C mais ces colles ont un temps de polymérisation supérieure à la minute. Par « colle structurale », on entend une colle dont les propriétés mécaniques sont proches de celles d'un assemblage mécanique.

### OBJET DE L'INVENTION

Un but de l'invention est de simplifier la fixation entre elles des tôles d'un paquet de tôles.

### BREF EXPOSE DE L'INVENTION

A cet effet, on prévoit, selon l'invention, un paquet de tôles pour machine électromagnétique, comprenant des paires de tôles fixées entre elles par des points de collage. Les points de collage comprennent des points d'une première colle et des points d'une deuxième colle ayant un temps de prise inférieur à un temps de prise de la première colle, le temps de prise de la deuxième colle étant de quelques secondes, la première colle ayant une propriété de fixation supérieure à celle de la deuxième colle.

Par « temps de prise », on entend le temps nécessaire à la colle, une fois en contact avec les deux tôles à fixer, pour assurer la fixation des tôles. Par « propriété de fixation », on entend par exemple la tenue en température ou la tenue à un environnement donné. Ainsi, la deuxième colle, dont la prise est rapide, va assurer la fixation des tôles pendant le processus de fabrication tandis que la première colle assurera elle la fixation des tôles du paquet de tôles pendant l'utilisation de celui-ci.

L'invention a également pour objet un procédé de réalisation d'un tel paquet de tôles. Ce procédé comprend les étapes de :
- faire défiler une bande métallique entre une matrice de détourage et un poinçon de détourage, des emplacements de tôles étant définis dans la bande,
- découper par poinçonnage des tôles dans la bande et les accumuler pour former un paquet de tôles ;
   le procédé étant caractérisé en ce qu'il comprend les étapes suivantes :
   - déposer sur une surface de la bande, en amont de la matrice de détourage et du poinçon de détourage, des points d'une première colle et des points d'une deuxième colle dans un emplacement destiné à former une tôle, la deuxième colle ayant une vitesse de polymérisation supérieure à une vitesse de polymérisation de la première colle,
   - découper par poinçonnage la tôle dans la bande de telle manière qu'elle soit collée au paquet de tôles.

L'invention concerne en outre une installation pour la mise en oeuvre de ce procédé. Cette installation de fabrication de paquets de tôles par poinçonnage, comprend une matrice, un poinçon et un dispositif de déplacement d'une bande entre la matrice et le poinçon. L'installation comprend, en amont de la matrice et du poinçon, un dispositif de dépôt, sur une surface de la bande, de points d'une première colle et de points d'une deuxième colle.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue en perspective d'une bande après découpe ;
- la figure 2 est une vue schématique en perspective, avec une coupe transversale, d'un paquet de tôles conforme à l'invention ;
- la figure 3 est une vue schématique en perspective d'une matrice d'une installation de fabrication selon un premier mode de mise en oeuvre de l'invention ;
- la figure 4 est une vue schématique en perspective du poinçon de cette installation de fabrication ;
- la figure 5 est une vue schématique en perspective de l'installation de fabrication selon le premier mode de mise en oeuvre de l'invention ;
- la figure 6 est une vue schématique en perspective d'une matrice d'une installation de fabrication selon un deuxième mode de mise en oeuvre de l'invention
- la figure 7 est une vue schématique en perspective de l'installation de fabrication selon le deuxième mode de mise en oeuvre de l'invention.

### DESCRIPTION DETAILLEE DE L'INVENTION

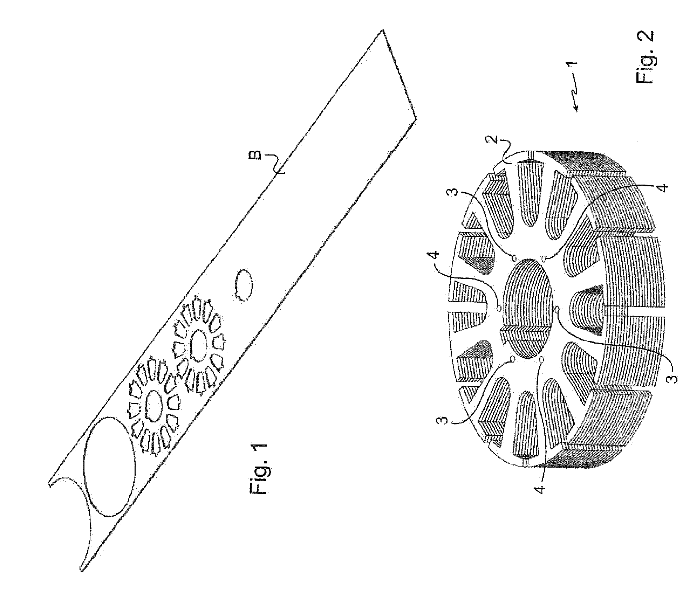

En référence à la figure 2, l'invention concerne un paquet de tôles, généralement désigné en 1, qui est destiné à former une armature de conduction des flux magnétiques dans une machine électromagnétique. Ladite armature est par exemple un stator ou un rotor.

Le paquet de tôles 1 comprend des tôles 2 fixées deux à deux par des points de collage disposés entre les tôles de chaque paire de tôles 2 adjacentes l'une à l'autre.

Les tôles 2 ont ici une forme annulaire, étant entendu que l'invention s'applique à des tôles de toute forme.

Les points de collage comprennent des points 3 d'une première colle et des points 4 d'une deuxième colle. La première colle et la deuxième colle sont des colles structurales.

La première colle a un temps de prise supérieur à un temps de prise de la deuxième colle et a une propriété de fixation supérieure à celle de la deuxième colle. La propriété de fixation en question est ici la tenue à la température et, plus particulièrement dans ce mode de réalisation, la tenue à une température supérieure à 150°C.

La première colle a un temps de prise de quelques minutes et est ici une colle acrylique.

La deuxième colle a un temps de prise de quelques secondes et est ici une colle cyanoacrylate.

En variante, la première colle est une colle époxy et la deuxième colle est une colle cyanoacrylate.

Les points de collage sont ici au nombre de trois pour chaque colle, à savoir trois points de première colle 3 disposés symétriquement à 120° les uns des autres et trois points de deuxième colle 4 disposés symétriquement à 120° les uns des autres en alternance avec les trois points de première colle 3.

En variante, le nombre de points de première colle 3 peut être différent du nombre de points de deuxième colle 4. La répartition des points de colle 3, 4 sur la tôle 2 peut ne pas être symétrique par exemple pour répondre à des sollicitations mécaniques s'appliquant de manière déséquilibrée sur le paquet de tôles 1 en utilisation normale.

Le procédé de fabrication d'un tel paquet de tôles 1 comprend les étapes de :
- faire défiler une bande métallique entre une matrice et un poinçon d'un outil de découpe, des emplacements de tôles étant définis dans la bande,
- déposer sur la bande, en amont de la matrice et du poinçon, des points d'une première colle et des points d'une deuxième colle dans chaque emplacement destiné à former une tôle,
- découper par poinçonnage la tôle dans la bande pour former un paquet de tôles de telle manière que la tôle découpée soit collée au paquet de tôles.

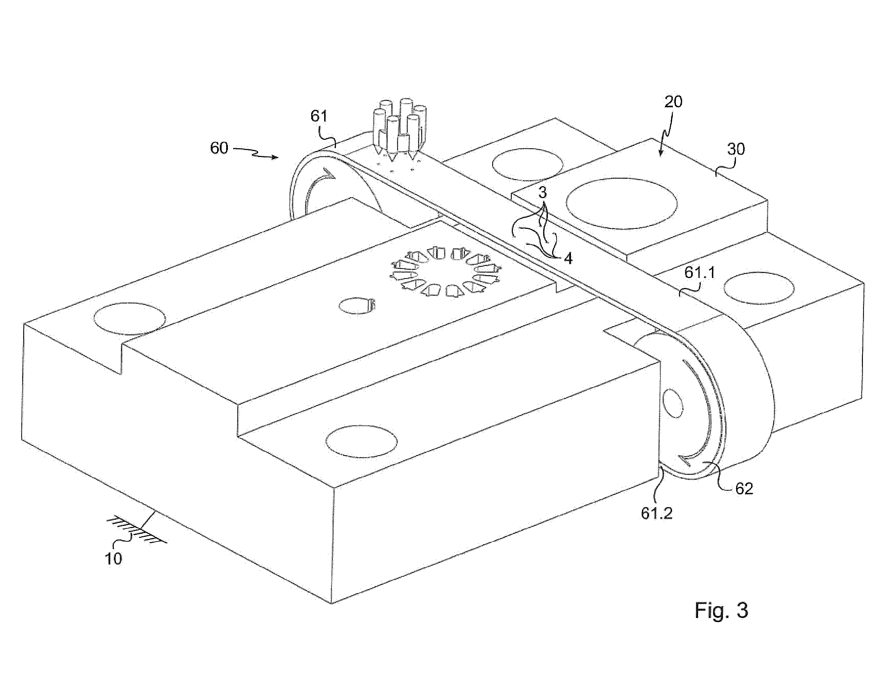

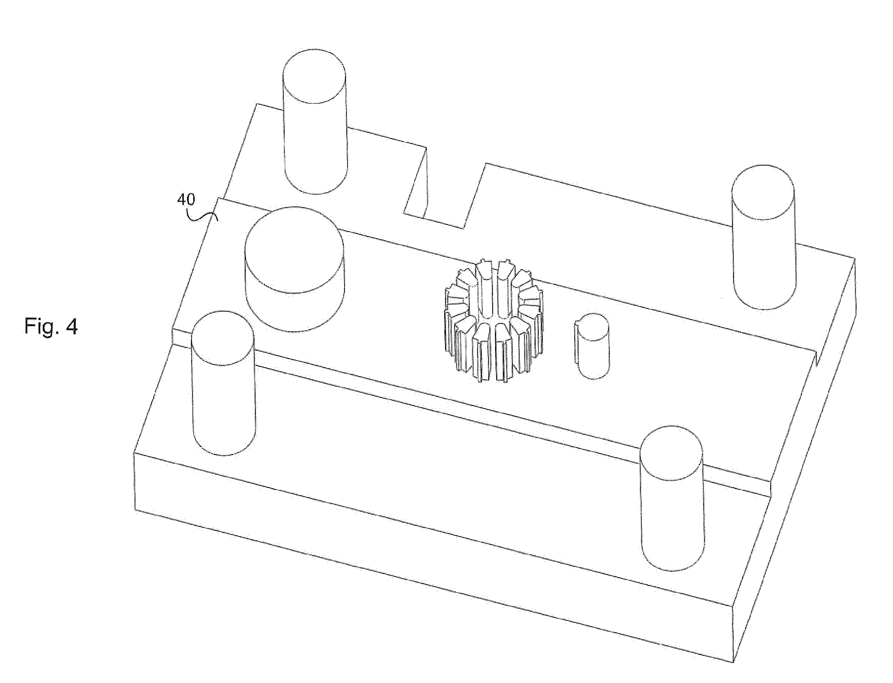

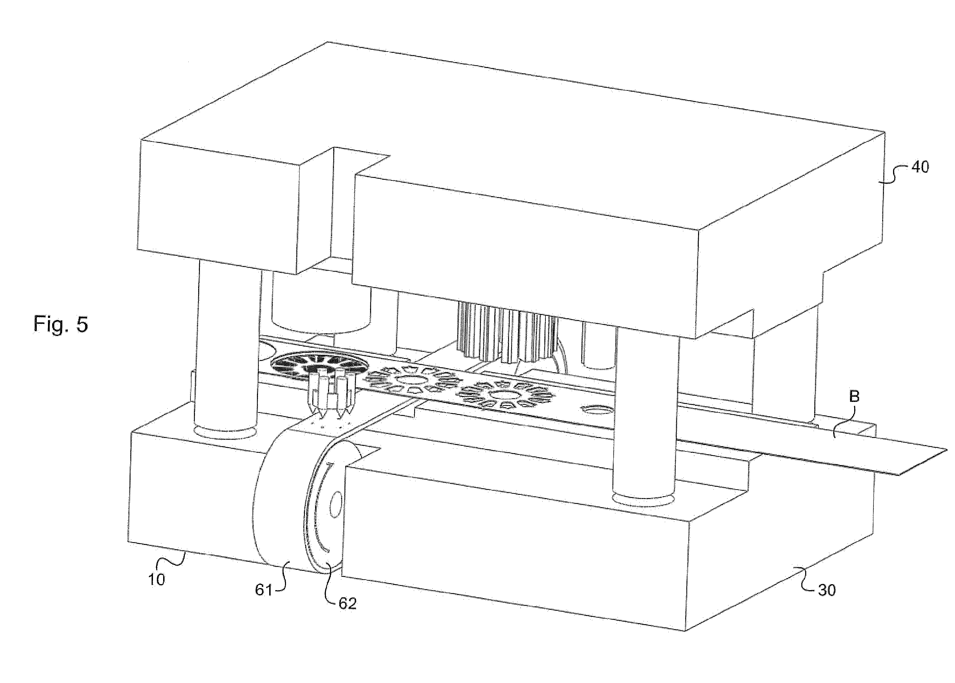

Ce procédé est mis en oeuvre au moyen d'une installation de fabrication de paquets de tôles par poinçonnage dont deux exemples sont représentés sur les figures 3 à 5 d'une part et 6 et 7 d'autre part. Une telle installation est couramment appelée un outil à suivre.

L'installation comprend un bâti 10 dont est solidaire une table 20 dans laquelle sont découpées des empreintes successives pour former des matrices dont la matrice de détourage 30. Un coulisseau est monté pour coulisser verticalement au-dessus de la table 20. Le coulisseau porte des poinçons en saillie dont un poinçon de détourage 40 en regard de la matrice de détourage 30. La matrice de détourage 30 et le poinçon de détourage 40 sont agencés pour permettre le découpage des tôles 2 dans la bande B en accumulant les unes au-dessus des autres, dans la matrice de détourage 2, les tôles 2 découpées, de manière à former le paquet de tôles 1 au fur et à mesure du découpage des tôles 2.

L'installation comprend un dispositif de déplacement par pas d'une bande B sur la table 20 de manière que la bande B passe entre les matrices et les poinçons. Le dispositif de déplacement par pas est agencé pour séquentiellement décoller la bande B de la table 20, faire avancer la bande B d'un pas puis reposer la bande B sur la table 20 de sorte que la bande B repose sur la table 20 lorsque la bande B est immobile et ne frotte pas sur la table 20 lors de l'avancement de la bande B. Ces différents éléments sont connus en eux-mêmes et ne seront pas plus détaillés ici.

L'installation comprend également, en amont de la matrice de détourage 30 et du poinçon de détourage 40 par référence au sens de défilement de la bande B, un dispositif 60 de dépôt, sur la bande B, de points de première colle 3 et de points de deuxième colle 4.

En référence aux figures 3 à 5 et selon le premier mode de mise en oeuvre du procédé de l'invention, le dispositif de dépôt 60 comprend un support tel qu'un tapis antiadhésif 61 s'étendant autour de galets 62 en formant une boucle allongée ayant un tronçon supérieur 61.1 et un tronçon inférieur 61.2 qui sont rectilignes et s'étendent selon une direction transversale à la bande B. Le tronçon supérieur 61.1 passe sur la table 20 juste sous la bande B de sorte qu'une portion de la bande B soit en contact avec la face supérieure du tronçon supérieur 61.1 lorsque la bande B est immobile et la bande B ne soit plus en contact avec la face supérieure du tronçon supérieur 61.1 lorsque la bande B est en déplacement. Le tapis antiadhésif 61 est ici en polytétrafluoréthylène.

L'un des galets 62 est lié en rotation à un moteur d'entraînement connecté, comme les moyens de motorisation des outils et du dispositif de déplacement, à une unité de commande de l'installation chargée d'assurer un fonctionnement synchronisé de ceux-ci.

Des points de colle 3, 4 ont été déposés sur une zone de la surface supérieure du tapis antiadhésif 61 ayant une forme correspondant à celle d'un emplacement de tôle de la bande B. Ainsi, à chaque fois que la bande B avance d'un pas, le tapis antiadhésif 61 avance lui aussi d'un pas. Lorsque la bande B est reposée sur la table 20, une portion de la bande B correspondant à l'emplacement de tôle est appliquée contre les points de colle 3, 4 et le tapis antiadhésif 61. Lorsque la bande B est décollée pour procéder à son avancement, les points de colles 3, 4 ont migré sur la bande B (la colle ayant un pouvoir d'adhésion à la bande B supérieur à son pouvoir d'adhésion sur le tapis antiadhésif 61). Le tapis antiadhésif 61 et la bande B sont avancés d'un pas. La face de portion de la bande B ayant reçu les points de colle 3, 4 se trouve alors en regard de la dernière tôle du paquet de tôles en cours de formation de telle manière que, lorsque le poinçon et la matrice vont être rapprochés pour découper la tôle de la bande B, ladite tôle va être appliquée contre le paquet de tôles 1 en cours de formation. Très rapidement (c'est-à-dire au plus tard quand le paquet de tôles terminé est évacué de l'installation), les points de deuxième colle 4 vont avoir suffisamment polymérisé pour assurer la fixation de la tôle dernièrement découpée au paquet de tôles 1 tandis que les points de première colle 3 vont poursuivre leur polymérisation.

Quelques minutes plus tard (mais ce pourrait être aussi quelques heures), la polymérisation des points de première colle 3 sera terminée et permettra à ceux-ci d'assurer eux aussi leur fonction de fixation.

En variante, le tapis antiadhésif peut être remplacé par un ruban de papier antiadhésif ayant au moins sa surface supérieure enduite d'une couche de polytétrafluoréthylène portant les points de colle. Le ruban de papier est jeté après que les points de colle ont été transférés sur la bande B. De cette manière on limite le risque d'un encrassement du dispositif de dépôt 60 lorsque le transfert des points de colle n'est pas parfait.

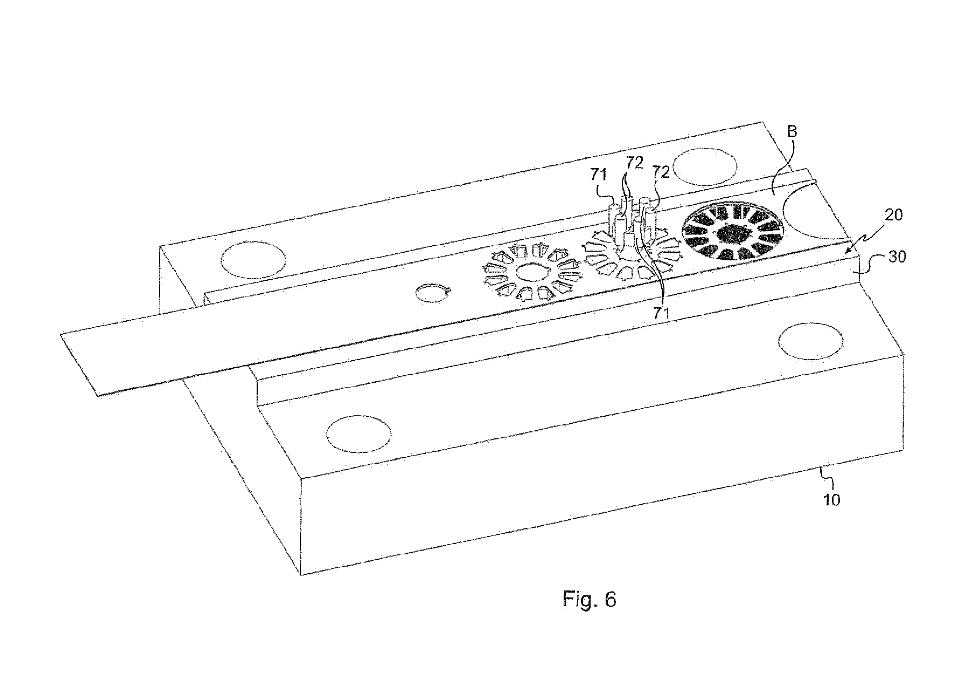

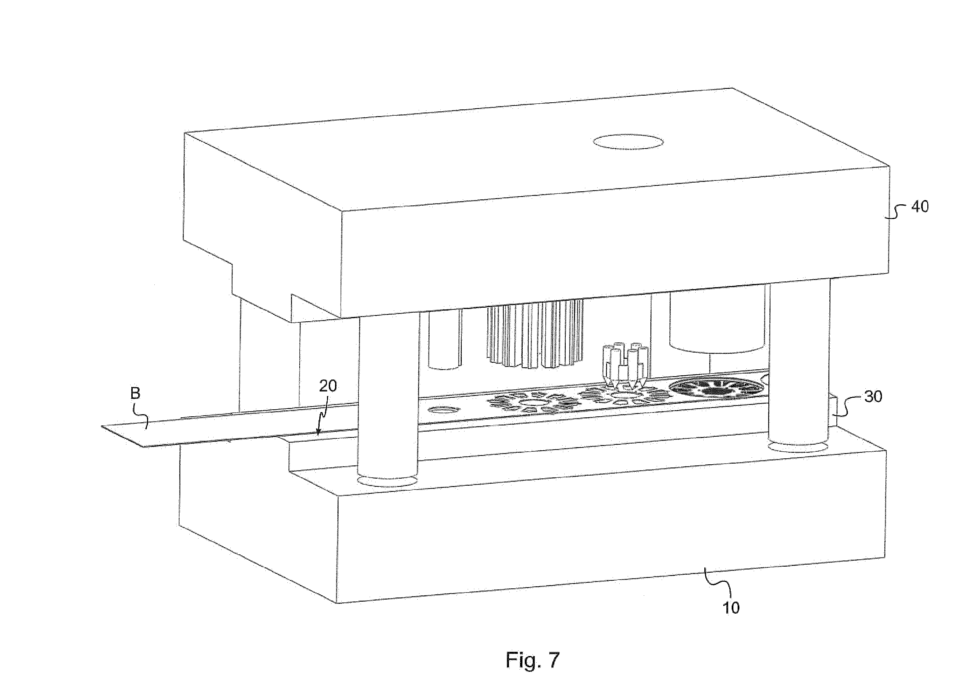

En référence aux figures 6 et 7 et selon le deuxième mode de mise en oeuvre du procédé de l'invention, le dispositif de dépôt 60 comprend des buses 71, 72 qui sont montées fixes sur le bâti 10 et débouchent au-dessus de la table 20 juste avant la matrice de détourage 30 et le poinçon de détourage 40. Les buses 71 sont reliées à un réservoir de première colle et les buses 72 sont reliées à un réservoir de deuxième colle. Les buses 71, 72 sont pourvues chacune d'un clapet commandable relié à l'unité de commande de l'installation pour être commandé en synchronisation avec l'avancement de la bande B. Le coulisseau comprend une ouverture recevant les buses 71, 72 lorsque le coulisseau est en position basse.

On note que la deuxième colle est choisie pour avoir une vitesse de polymérisation compatible avec la cadence de production de l'installation (typiquement, l'installation produit un paquet de tôles toutes les cinq à trente secondes).

On note que la première colle est choisie pour avoir une vitesse de polymérisation compatible avec le délai entre la fabrication du paquet de tôles et son utilisation.

Bien entendu, l'invention n'est pas limitée aux modes de réalisation décrits mais englobe toute variante entrant dans le champ de l'invention telle que définie par les revendications.

En particulier, l'installation peut avoir une structure différente de celle décrite.

Lorsque les points de colle sont déposés par des buses directement sur la bande, les buses peuvent être montées fixes ou mobiles par rapport au bâti, au-dessus ou en dessous de la bande B. Les buses peuvent être portées par un portique fixe s'étendant au-dessus de la table 20 ou par un robot.

Plus de deux colles différentes peuvent être utilisées : une colle de fixation rapide et les autres colles avec des propriétés de fixation différentes.

Les colles peuvent être des colles mono-composants ou bi-composants.

En variante, il est possible de combiner les deux modes de réalisation en ayant un tapis ou ruban antiadhésif pour déposer l'une des deux colles par transfert sur la bande et des buses pour déposer l'autre des deux colles directement sur la bande. Dans le cas d'une colle bi-composant, on peut prévoir que la résine soit déposée au moyen d'un tamis ou d'un ruban et que l'activateur soit déposé sur la résine par une buse séparée.

## Revendications

1. Paquet de tôles pour machine électromagnétique, comprenant des paires de tôles fixées entre elles par des points de collage, **caractérisé en ce que** les points de collage comprennent des points d'une première colle et des points d'une deuxième colle ayant un temps de prise inférieur à un temps de prise de la première colle, le temps de prise de la deuxième colle étant de quelques secondes, la première colle ayant une propriété de fixation supérieure à celle de la deuxième colle.

2. Paquet de tôles selon la revendication 1, dans lequel la première colle est une colle acrylique.

3. Paquet selon la revendication 1 ou la revendication 2, dans lequel la deuxième colle est une colle cyanoacrylate.

4. Paquet de tôles selon l'une quelconque des revendications précédentes, dans lequel la propriété de fixation est la tenue à la température.

5. Procédé de fabrication d'un paquet de tôles selon l'une quelconque des revendications précédentes, comprenant les étapes de :
- faire défiler une bande métallique entre une matrice de détourage et un poinçon de détourage, des emplacements de tôles étant définis dans la bande,
- découper par poinçonnage des tôles dans la bande et les accumuler pour former un paquet de tôles ;
le procédé étant **caractérisé en ce qu'**il comprend les étapes suivantes :
- déposer sur une surface de la bande, en amont de la matrice de détourage et du poinçon de détourage, des points d'une première colle et des points d'une deuxième colle dans un emplacement destiné à former une tôle, la deuxième colle ayant une vitesse de polymérisation supérieure à une vitesse de polymérisation de la première colle,
- découper par poinçonnage la tôle dans la bande de telle manière qu'elle soit collée au paquet de tôles.

6. Procédé selon la revendication 5, dans lequel au moins une partie des points de colle est dans un premier temps déposée sur un support antiadhésif en amont de la matrice et du poinçon, le procédé comprenant l'étape d'appliquer la bande sur les points de colle portés par le support antiadhésif pour transférer les points de colle dans un emplacement de tôle de la bande.

7. Procédé selon la revendication 5, dans lequel au moins une partie des points de colle est déposée directement sur la bande.

8. Installation de fabrication de paquets de tôles par poinçonnage conformément au procédé de l'une quelconque des revendications 5 à 7, comprenant une matrice, un poinçon et un dispositif de déplacement d'une bande entre la matrice et le poinçon, **caractérisé en ce que** l'installation comprend, en amont de la matrice et du poinçon, au moins un dispositif de dépôt, sur une surface de la bande, de points d'une première colle et de points d'une deuxième colle.
